# EUROPÄISCHE PATENTSCHRIFT

(11) **EP 1 280 265 B1**
(45) Veröffentlichungstag und Bekanntmachung des Hinweises auf die Patenterteilung: **27.02.2008**
(21) Anmeldenummer: 02008363.0
(22) Anmeldetag: 12.04.2002
(51) Int. Cl.: H02P 6/16, H02K 29/06

(54) **Sensorsystem und Verfahren zum Ermitteln der Kommutierungssignale eines elektronisch kommutierten Elektromotors**
Position sensor system and method for determination of the commutation signals of an electronically commutated electric motor
Système de détection de position et procédé pour la détermination des signaux de commutation d'un moteur électrique à commutation électronique

(30) Priorität: 25.07.2001 DE 10136158
(43) Veröffentlichungstag der Anmeldung: 29.01.2003
(73) Patentinhaber: APAG Elektronik AG, 8600 Dübendorf (CH)
(72) Erfinder: Mariethoz, Bruno, 6025 Neudorf (CH)
(74) Vertreter: Kohler Schmid Möbus

(56) Entgegenhaltungen:
- WO-A-90/00831
- DE-A1- 4 410 005
- GB-A- 2 266 196

## Beschreibung

Die Erfindung betrifft ein Verfahren zum Ermitteln der Kommutierungssignale eines elektronisch kommutierten Elektromotors, insbesondere eines geschalteten Reluktanzmotors (SR-Motor), gemäß Oberbegriff von Anspruch 1 sowie ein Steuersystem gemäß Oberbegriff von Anspruch 6.

Derartige Sensorsysteme und Verfahren sind beispielsweise aus der DE 44 100 05 A1 bekannt geworden.

Reluktanzmotoren benötigen zur genauen Steuerung der Kommutierungswinkel einen Positionsgeber, der die Rotorposition im Verhältnis zur Statorposition ermittelt, damit die Ansteuerelektronik die jeweilige Phase richtig ansteuert. Beim Einschalten einer Statorwicklung wirkt auf den Rotor ein Drehmoment, welches von der magnetischen Anziehungskraft zwischen Stator- und Rotorpol herrührt. Die Regelung (Verarbeitungseinheit für die Sensorsignale bzw. Ansteuerelektronik) sorgt anhand der Informationen vom Positionsgeber dafür, dass die Spulen im richtigen Augenblick erregt sind, um das benötigte Drehmoment auf die wirksamste Weise zu erzeugen. An die Genauigkeit des Positionsgebers werden hohe Anforderungen gestellt, wenn der SR-Motor bezüglich Drehmoment, Drehzahlkonstanz, Geräusch und Wirkungsgrad optimal gesteuert werden soll.

Aus der DE 44 10 005 A1 ist es bekannt, aus einer einzigen ersten Markierung und einer einzigen zweiten Markierung mittels Hallsensoren zwei Sensorsignale zu messen, die jeweils als erstes und zweites Kommutierungssignal verwendet werden und daraus mittels einer NOR-Verknüpfung ein drittes Kommutierungssignal zu generieren.

Aus der GB-A-2 266 196 ist ein geschalteter Reluktanzmotor mit einem Stator, mit einem Rotor, mit einer Positionsdetektierung zum Detektieren einer Rotorposition und mit einer Steuereinheit bekannt, die aufgrund der detektierten Rotorposition Signale für jede Phase erzeugt. Die Positionsdetektierung weist eine Sensorscheibe und zwei Sensoren auf, die offene und geschlossene Abschnitte der Sensorscheibe detektieren.

Gemäß der DE 195 27 981 A1 wird ein magnetisches Sensorsystem zur Kommutierungssteuerung von Elektromotoren, insbesondere von SR-Motoren dadurch geschaffen, dass die Rotorwelle einen Magnetring aus einem zylindrischen Körper aufweist, dessen Mantelfläche mehrpolig radial magnetisiert ist und dass ein magnetfeldsensitives Element für jede Phase des SR-Motors vorgesehen ist, welches zu den Statorpolen ausgerichtet ist und in geringem Abstand zu der Mantelfläche des Magnetrings angeordnet ist. Die Herstellung des Magnetrings ist jedoch relativ teuer.

Außerdem muss bei der Herstellung des mehrpolig radial magnetisierten Magnetrings in einer Magnetisierungsvorrichtung auf die möglichen Fehler der Magnetisierungsvorrichtung Rücksicht genommen werden.

Aufgabe der vorliegenden Erfindung ist es deshalb, ein Verfahren und ein Steuersystem zum Ermitteln der Kommutierungssignale anzugeben, bei denen aus den gleichen Signalen die Erfassung der Drehrichtung ermöglicht wird.

Gelöst wird diese Aufgabe erfindungsgemäß durch ein Verfahren mit den Merkmalen von Anspruch 1.

Der erste und zweite Sensor sind ortsfest angeordnet, so dass sich die erste und zweite Markierungen bei sich drehender Rotorwelle an den Sensoren vorbeibewegen. Im Gegensatz zum Stand der Technik ist nicht ein Sensor für jede Phase vorgesehen, sondern werden durch geeignete Kombination der von nur zwei Sensoren gegebenen Signalen die Kommutierungssignale erzeugt. Durch die Kommutierungssignale werden die Phasen der Motorwicklungen im richtigen Kommutierungswinkel ein- und ausgeschaltet. Für einen dreiphasigen Elektromotor werden somit erfindungsgemäß nur zwei Signale benötigt, um drei Kommutierungssignale zu erzeugen. Die Phasen der Motorwicklungen können auf den "High"- oder "Low"-Pegeln der Kommutierungssignale geschaltet werden, je nachdem, was als Schaltpegel gewählt wird. Die Erzeugung der Kommutierungssignale kann dabei elektronisch durch eine geeignete Logikschaltung, einen Microcontroller oder einen digitalen Signalprozessor (DSP) erfolgen. Wichtig ist, dass die Phasen der Motorwicklungen nacheinander geschaltet werden. Es kann sowohl eine Sequenz von "High"-Pegeln der Kommutierungssignale als auch eine Sequenz von "Low"-Pegeln zum Schalten der Phasen verwendet werden. Das erste Kommutierungssignal wird direkt aus dem ersten Sensorsignal erzeugt, d.h. es entspricht dem ersten Sensorsignal oder dessen Invertierung. Erfindungsgemäß überlappen sich gleichartige Pegel der Sensorsignale kurzzeitig, und aus dieser Überlappung der Signale lässt sich die Drehrichtung der Rotorwelle einfach ermitteln. Somit können aus nur zwei Sensorsignalen die Kommutierungssignale unter Berücksichtigung der Drehrichtungsinformation erzeugt werden. Erfindungsgemäß kann sowohl eine Überlappung der "High"- als auch der "Low"- Pegel zur Drehrichtungserfassung vorgesehen sein.

Bei einer Verfahrensvariante entspricht das erste Kommutierungssignal dem ersten Sensorsignal, das zweite Kommutierungssignal nimmt den Pegel "High" ein, wenn das zweite Sensorsignal den Pegel "High" und das erste Sensorsignal den Pegel "Low" aufweist, und das dritte Kommutierungssignal wird aus einer NOR-Verknüpfung der Sensorsignale gebildet. Durch diese Maßnahme können die Kommutierungssignale besonders einfach mit geringem schaltungstechnischem Aufwand erzeugt werden.

Bei einer bevorzugten Verfahrensvariante werden Sensorsignale mit dem Pegel "High" ausgegeben, wenn die Sensoren eine zweite Markierung der Geberscheibe erfassen, und Sensorsignale mit dem Pegel "Low", wenn die Sensoren eine erste Markierung der Geberscheibe erfassen.

Zur Rotorlage- und/oder Drehzahlerfassung und/oder Drehrichtungserfassung kann aus dritten und vierten Sensorsignalen, die von stationären Sensoren, welche eine dritte und vierte Markierung der Geberscheibe erfassen, gegeben werden, elektronisch ein Signal erzeugt werden, das nur dann den Pegel "High" aufweist, wenn beide Sensorsignale denselben Pegel aufweisen. Durch ein solches Signal kann eine Feinerfassung der Drehgeschwindigkeit und der Rotorposition und Drehrichtung erfolgen. Dies ist besonders bei niedrigen Drehzahlen sowie zum Starten des Motors vorteilhaft.

Bei einer Weiterbildung der Verfahrensvariante weisen das dritte und vierte Sensorsignal eine versetzte Pulsfolge auf. Durch diese Maßnahme werden die Sensorsignale für die Positionsbestimmung der Rotorwelle optimal ausgenutzt. Sind die Signale des dritten und vierten Sensors um eine viertel Periode zueinander versetzt, ergibt sich durch das erzeugte Signal eine Positionsauflösung der Rotorwelle von 360°/(4 * (Anzahl der dritten Markierungen)).

Die obengenannte Aufgabe wird erfindungsgemäß auch gelöst durch ein Sensorsystem mit den Merkmalen von Anspruch 6.

Die Sensoren geben beispielsweise jeweils einen Signalpegel "High", wenn die zweite Markierung erkannt wird und den Signalpegel "Low", wenn die erste Markierung detektiert wird. Wenn der Winkel zwischen erstem und zweitem Sensor geringfügig geringer ist als der von der zweiten Markierung abgedeckte Winkelbereich der Geberscheibe, dann gibt es einen kleinen Bereich, währenddessen dieselbe zweite Markierung von beiden Sensoren gleichzeitig erfasst wird.

Beide Sensoren geben beispielsweise den Pegel "High" aus. Wie gering die Winkelabweichung zwischen den Sensoren und dem von der ersten Markierung abgedeckten Winkelbereich ist, hängt von den Fertigungstoleranzen der Geberscheibe, der Genauigkeit der Ausrichtung der Sensoren zu der Geberscheibe, der Güte der von den Sensoren gegebenen Signalen (Steilheit der Flanken) und der zeitlichen Auflösung bzw. Genauigkeit, mit der die nachgeschaltete Ansteuerungselektronik die Signale verarbeiten kann, ab. In der Regel wird eine Winkelabweichung von 1,5° oder weniger realisierbar sein. Aufgrund der Überlappung der Signale kann die Drehrichtung der Geberscheibe und damit der Rotorwelle bestimmt werden.

Bei einer Ausgestaltung der Erfindung deckt die erste Markierung einen doppelt so großen Winkelbereich ab wie die zweite Markierung. Durch diese Maßnahme sind die Signale der Sensoren so zueinander versetzt, dass die Kommutierungssignale für einen dreiphasigen Elektromotor besonders einfach erzeugt werden können.

Vorteilhaft ist es, wenn die Anzahl der zweiten Markierung der Anzahl der Rotorpole oder einem Vielfachen davon entspricht. Kommutierungsfehler können dadurch minimiert werden. Es versteht sich, dass durch die Erhöhung der Anzahl der Flächenabschnitte mit der ersten Markierung auf der Geberscheibe die Anzahl der Flächenabschnitte, die die zweite Markierung tragen, in gleichem Maße erhöht wird, da sich die Markierungen abwechseln. Durch die Erhöhung der Anzahl der Markierungen erhöht sich die Auflösung der Positionsbestimmung der Geberscheibe.

Ist auf der Geberscheibe eine zweite koaxial zur Rotationsachse angeordnete Ringmarkierung vorgesehen, die in Rotationsrichtung abwechselnd dritte Markierungen und vierte Markierungen aufweist, und sind zwei die Markierungen erfassende stationäre Sensoren vorgesehen, dann kann, insbesondere bei niedrigen Drehzahlen und sich häufig abwechselnden dritten und vierten Markierungen, eine genaue Positionsbestimmung der Geberscheibe erfolgen.

Bei einer bevorzugten Weiterbildung decken die dritte und vierte Markierung jeweils den gleichen Winkelbereich ab, so dass von dem dritten und vierten Sensor Rechtecksignale mit gleichem Pulsverhältnis gegeben werden. Durch nur eines der Signale kann die Drehgeschwindigkeit der Rotorwelle ermittelt werden. Durch Beobachtung und/oder Kombination beider Signale kann die Drehrichtung der Geberscheibe und damit der Rotorwelle ermittelt werden, z.B. durch Feststellung, in welcher Reihenfolge ein Wechsel der Pegel der jeweiligen Signale erfolgt. Gleichzeitig wird die Auflösung um den Faktor 2 verbessert.

Bei einer bevorzugten Ausgestaltung ist die Geberscheibe als Lochscheibe ausgebildet, wobei die erste und/oder dritte Markierung einer Ausnehmung und die zweite und/oder vierte Markierung einem Steg entspricht. Ausnehmungen haben den Vorteil, keine Reflexionen zu verursachen. Der Wechsel von Ausnehmung und Steg stellt einen großen Signalhub sicher. Weiterhin sind Lochscheiben wenig anfällig für Verschmutzungen und können kostengünstig hergestellt werden. Die Stege/Ausnehmungen für den ersten und zweiten Sensor können ohne Weiteres auf der gleichen Geberscheibe angeordnet werden, wie die Stege/Ausnehmungen für den dritten und vierten Sensor. Solche Geberscheiben können somit für Elektromotoren verwendet werden, die in einem hohen und einem niedrigen Drehzahlbereich eingesetzt werden. Erfindungsgemäß kann ein Steg auch der ersten und dritten Markierung und eine Ausnehmung der zweiten und vierten Markierung zugeordnet werden.

Die Sensoren können als optische, induktive oder kapazitive Sensoren ausgebildet sein. Als optische Sensoren können insbesondere Reflexionssensoren eingesetzt werden. Auch Gabellichtschranken können zum Einsatz kommen. Es versteht sich, dass die Markierungen der Geberscheibe entsprechend den verwendeten Sensoren abgestimmt werden, so dass die Markierungen vom jeweils verwendeten Sensor zweifelsfrei erkannt werden können.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigt:
- **Fig. 1a**: eine Geberscheibe in einer ersten Position relativ zu ortsfesten Sensoren;
- **Fig. 1b**: die Geberscheibe der Fig. 1a in einer zweiten Position relativ zu ortsfesten Sensoren;
- **Fig. 1c**: die Geberscheibe der Fign. 1a und 1b in einer dritten Position relativ zu ortsfesten Sensoren;
- **Fig. 2**: die von den Sensoren gegebenen Signale und daraus erzeugte Kommutierungssignale für die Ansteuerung der Motorwicklungen;
- **Fig. 3**: die von Sensoren einer Feinsensorik gegebenen Signale und ein daraus erzeugtes Signal.

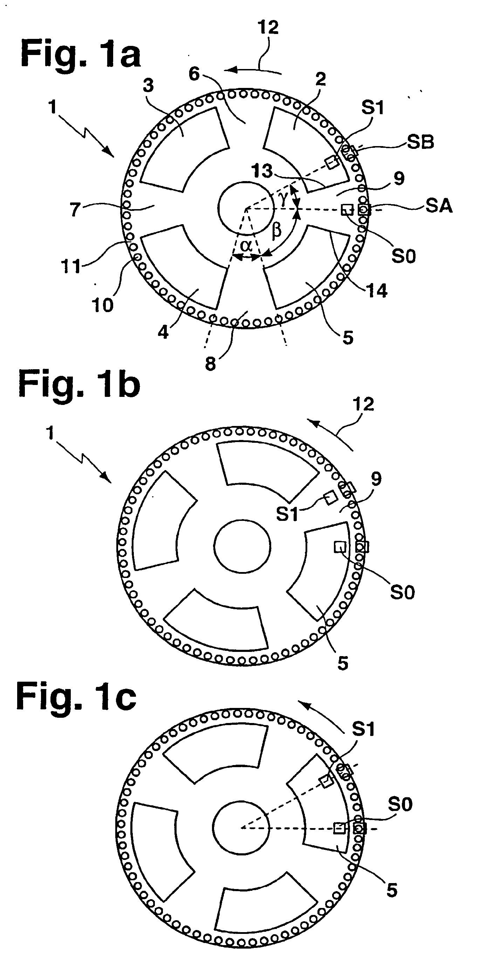

**Fig. 1a** zeigt eine Geberscheibe **1,** die rotationsfest auf der nicht dargestellten Welle eines Rotors eines dreiphasigen Elektromotors befestigt ist. Die Geberscheibe 1 weist koaxial zur Rotationsachse eine Ringmarkierung mit abwechselnd ersten Markierungen **2-5** und zweiten Markierungen **6-9** auf, wobei die ersten Markierungen 2-5 als Ausnehmungen und die zweiten Markierungen 6-9 als Stege ausgebildet sind. Die Anzahl der ersten Markierungen 2-5 entspricht der Anzahl der Rotorpole des Elektromotors bzw. einem Vielfachen davon. Im Ausführungsbeispiel der Fig. 1a deckt jede zweite Markierung 6-9 einen Winkelbereich α von 30° und jede erste Markierung 2-5 einen Winkelbereich β von 60° ab. Wenn sich der Rotor des Elektromotors dreht, dreht sich die Geberscheibe 1 mit. Dabei überstreicht der innere Ring der Geberscheibe 1 Sensoren **S0** und **S1** einer nicht rotierbaren, von der Geberscheibe 1 gering beabstandeten Sensorscheibe. Durch die Sensoren S0, S1 und die sich abwechselnden ersten Markierungen 2-5 und zweiten Markierungen 6-9 der Geberscheibe 1 wird die Kommutierungssensorik bestimmt. Die Sensoren S0, S1 weisen bezogen auf die Rotorachse einen Winkel γ von 28,75° zueinander auf. Durch den Sensor S0 wird das Signal **C0** gegeben und durch den Sensor S1 das Signal **C1.** Die Signale C0, C1 haben den Pegel "Low", wenn der jeweilige Sensor S0, S1 von einer ersten Markierung 2-5 überstrichen wird und den Pegel "High", wenn der jeweilige Sensor S0, S1 von einer zweiten Markierung 6-9 überstrichen wird. Die Geberscheibe 1 weist weiterhin eine äußere Ringmarkierung mit äquidistanten dritten Markierungen **10** auf, die als Ausnehmungen ausgebildet sind. Die dritten Markierungen 10 bzw. als Stege ausgebildeten vierten Markierungen **11** zwischen den dritten Markierungen 10 werden von Sensoren **SA** und **SB,** die ebenfalls auf der Sensorscheibe angeordnet sind, erfasst. Die Sensoren SA, SB geben Signale A, B, wobei der Pegel "Low" ausgegeben wird, wenn eine dritte Markierung 10 einen Sensor SA, SB überstreicht, und der Pegel "High", wenn eine vierte Markierung 11 einen Sensor SA, SB überstreicht. Im Ausführungsbeispiel weisen die Sensoren SA, SB bezogen auf die Rotationsachse einen Winkel von 28,75° zueinander auf.

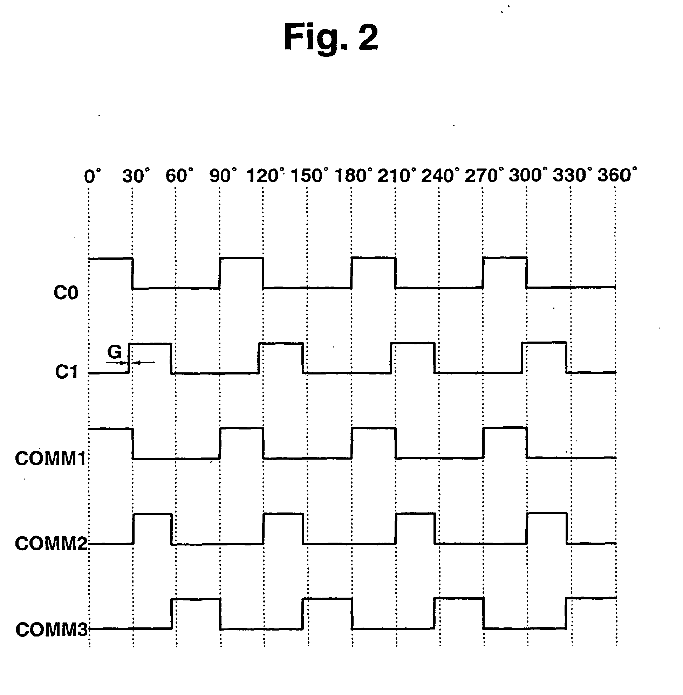

**Fig. 2** zeigt die von den Sensoren S0 S1 gegebenen Signale C0, C1 und die daraus erzeugten Kommutierungssignale **COMM1, COMM2, COMM3** für die drei Phasen des Elektromotors. Die Signale im Bereich 0° bis 30° entsprechen der Anordnung der Fig. 1a. Der Sensor S0 wird von der zweiten Markierung 9 überstrichen und gibt demzufolge das Signal C0 mit dem Pegel "High". Der Sensor S1 wird von der ersten Markierung 2 überstrichen und gibt daher das Signal C1 mit dem Pegel "Low". Dreht sich die Geberscheibe 1 in Pfeilrichtung **12** weiter, so überstreicht die zweite Markierung 9 den Sensor S1 und C1 geht auf "High". Da der Winkel γ zwischen den Sensoren S0, S1 geringer ist als der Winkel α zwischen den Kanten **13, 14** der zweiten Markierung 9, sind die Signale C0 und C1 während eines Winkelbereichs von 1,25° beide auf dem Pegel "High". Es entsteht eine Überlappung **G,** durch die die Drehrichtung der Geberscheibe 1 und damit des Rotors bestimmt werden kann.

Der in **Fig. 1b** gezeigten Anordnung entspricht der Bereich von 30° bis 60° der in Fig. 2 gezeigten Signale. Der Sensor S0 wird von der ersten Markierung 5 überstrichen und gibt entsprechend einen Pegel "Low" für das Signal C0. Der Sensor S1 wird von der zweiten Markierung 9 überstrichen und gibt entsprechend das Signal C1 mit dem Pegel "High".

Bei einer weiteren Drehung der Geberscheibe 1 in Pfeilrichtung 12 gelangt man zu der Anordnung in **Fig. 1c****,** die dem Bereich von 60° bis 90° der in Fig. 2 gezeigten Signale entspricht. Beide Sensoren S0, S1 werden von der Ausnehmung 5 überstrichen und geben für die Signale C0, C1 den Pegel "Low".

Aus den Signalen C0, C1 werden elektronisch die Kommutierungssignale COMM1, COMM2 und COMM3 für die drei Phasen des Elektromotors erzeugt. Das Kommutierungssignal COMM1 entspricht dem Signal C0, d.h. COMM1 = C0. Das Kommutierungssignal COMM2 nimmt nur dann den Pegel "High" an, wenn gleichzeitig das Signal C0 den Pegel "Low" hat und das Signal C1 den Pegel "High" hat. Das Kommutierungssignal COMM3 nimmt nur dann den Pegel "High" an, wenn gleichzeitig das Signal C0 und das Signal C1 den Pegel "Low" haben. Das Signal COMM2 geht also um 1,25° zu früh auf den Pegel "Low" und das Signal COMM3 um 1,25° zu früh auf "High", was einen leichten Kommutierungsfehler für die Phasen 2 und 3 bedeutet. Für die meisten Anwendungsfälle hat dies keine Auswirkung auf die Regelung des Elektromotors. Erforderlichenfalls kann der Phasenfehler jedoch elektronisch oder softwaremäßig korrigiert werden. Die "High"-Pegel der Kommutierungssignale COMM1, COMM2, COMM3 schließen sich direkt aneinander an und überlappen sich nicht, sondern bilden eine sich wiederholende (zeitliche) Sequenz, so dass die Phasen des Elektromotors nacheinander geschaltet werden. Es ist auch denkbar, dass aus den Sensorsignalen C0, C1 Kommutierungssignale erzeugt werden, die gerade der Invertierung der in Fig. 2 dargestellten Kommutierungssignale COMM1, COMM2, COMM3 entsprechen. In diesem Fall wird jeweils eine Phase des Elektromotors geschaltet, wenn das zugehörige Kommutierungssignal den "Low"-Pegel einnimmt. Weiterhin ist denkbar, dass die von den Sensoren gegebenen Signale der Invertierung der in Fig. 2 dargestellten Sensorsignale C0, C1 entsprechen und daraus die in Fig. 2 dargestellten Kommutierungssignale COMM1, COMM2, COMM3 durch geeignete Verknüpfungen erzeugt werden. Außerdem ist denkbar, dass alle in Fig. 2 gezeigten Signale invertiert sind.

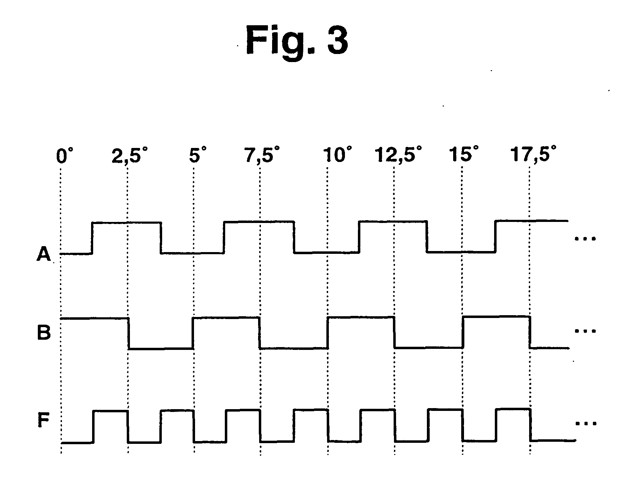

In **Fig. 3** sind die Signale A, B dargestellt, die von einer Feinsensorik gegeben werden, d.h. von den durch die Sensoren SA, SB in Fig. 1a-1c abgetasteten dritten Markierungen 10 bzw. vierten Markierungen 11. Die Signale A, B haben den Pegel "Low", wenn die Sensoren SA, SB eine dritte Markierung 10 erkennen, und den Pegel "High", wenn eine vierte Markierung 11 erkannt wird. Der Durchmesser und Abstand (vierte Markierung 11) der dritten Markierungen 10 sind so gewählt, dass sich zwei Rechtecksignale A,B im Pulsverhältnis 1:1 ergeben, wobei die Sensoren SA, SB so positioniert sind, dass die Signale A, B eine um 90° versetzte Pulsfolge aufweisen. Aus den Signalen A, B wird elektronisch ein Rechtecksignal **F** mit einer Auflösung von 360°/(4* Anzahl der Ausnehmungen 10) erzeugt. Für eine Geberscheibe 1 mit 72 Ausnehmungen 10 ergibt dies eine Auflösung von 1,25°. Somit kann die Position der Geberscheibe 1 bzw. der Rotorwelle des Elektromotors, auf dem sie angeordnet ist, auf 1,25° genau bestimmt werden. Die Drehrichtung der Geberscheibe 1 kann ermittelt werden, indem z.B. erfasst wird, ob einer steigende Flanke des Signals A eine steigende oder fallende Flanke des Signals B folgt.

## Patentansprüche

1. Verfahren zum Ermitteln der Kommutierungssignale für einen elektronisch kommutierten Elektromotor, bei dem ein erster und ein zweiter stationärer Sensor (S0, S1) sich abwechselnde erste und zweite Markierungen (2-5; 6-9) einer Ringmarkierung einer auf der Rotorwelle des Elektromotors angeordneten Geberscheibe (1) erfassen und entsprechend der jeweils erfassten Markierung Sensorsignale (C0, C1) mit den Pegeln "High" oder "Low" geben, wobei aus den beiden Sensorsignalen (C0, C1) drei Kommutierungssignale (COMM1, COMM2, COMM3) erzeugt werden, wobei das erste Kommutierungssignal (COMM1) direkt aus dem ersten Sensorsignal (C0) und das zweite Kommutierungssignal (COMM2) aus einer Verknüpfung des ersten und des zweiten Sensorsignals (C0, C1) erzeugt wird, derart, dass sich eine sich wiederholende Sequenz der Schaltpegel der Kommutierungssignale (COMM1, COMM2, COMM3) ergibt,
**dadurch gekennzeichnet,**
**dass** das dritte Kommutierungssignal (COMM3) aus einer Verknüpfung zweier oder mehrerer der vorgenannten Signale (C0, C1, COMM1, COMM2), insbesondere aus einer Verknüpfung des ersten und zweiten Sensorsignals (C0, C1) oder aus einer Verknüpfung des ersten und zweiten Kommutierungssignals (COMM1, COMM2) erzeugt wird und dass sich gleichartige Pegel der Sensorsignale (C0, C1), insbesondere die "High"-Pegel, kurzzeitig überlappen.

2. Verfahren nach Anspruch 1, **dadurch gekennzeichnet, dass** das erste Kommutierungssignal (COMM1) dem ersten Sensorsignal (C0) entspricht, das zweite Kommutierungssignal (COMM2) den Pegel "High" einnimmt, wenn das zweite Sensorsignal (C1) den Pegel "High" und das erste Sensorsignal (C0) den Pegel "Low" aufweist, und das dritte Kommutierungssignal (COMM3) aus einer NOR-Verknüpfung der beiden Sensorsignale (C0, C1) gebildet wird.

3. Verfahren nach Anspruch 1 oder 2, **dadurch gekennzeichnet, dass** Sensorsignale (C0, C1) mit dem Pegel "High" ausgegeben werden, wenn die Sensoren (S0, S1) eine zweite Markierung (6-9) der Geberscheibe (1) erfassen, und Sensorsignale (C0, C1) mit dem Pegel "Low" ausgegeben werden, wenn die Sensoren (S0, S1) eine erste Markierung (2-5) der Geberscheibe erfassen.

4. Verfahren nach einem der vorhergehenden Ansprüche, **dadurch gekennzeichnet, dass** zur Rotorlage- und/oder Drehzahlerfassung stationäre Sensoren (SA, SB), die eine dritte und vierte Markierung (10, 11) der Geberscheibe (1) erfassen, Sensorsignale (A, B) geben, aus denen elektronisch ein Signal (F) erzeugt wird, das nur dann den Pegel "High" aufweist, wenn beide Sensorsignale (A, B) denselben Pegel aufweisen.

5. Verfahren nach Anspruch 4, **dadurch gekennzeichnet, dass** die Sensorsignale (A, B) eine, insbesondere um eine viertel Periode, versetzte Pulsfolge aufweisen.

6. Sensorsystem eines elektronisch kommutierten Elektromotors zur Durchführung des Verfahrens nach einem der Ansprüche 1 bis 5, umfassend eine auf der Rotorwelle des Elektromotors befestigte Geberscheibe (1) mit einer koaxial zur Rotationsachse angeordneten Ringmarkierung, die in Rotationsrichtung abwechselnd erste und zweite Markierungen (2-5; 6-9) aufweist, zwei die Markierungen (2-9) jeweils erfassende stationäre Sensoren (S0, S1) und eine Verarbeitungseinheit für die Signale (C0, C1) der Sensoren (S0, S1)
**dadurch gekennzeichnet,**
**dass** die Ringmarkierung der Geberscheibe (1) abwechselnd mehrere erste Markierungen (2-5) und mehrere zweite Markierungen (6-9) aufweist, dass der erste und der zweite Sensor (S0, S1) in einem Winkel (γ) bezogen auf die Rotationsachse der Rotorwelle angeordnet sind, wobei eine der zweiten Markierungen (6-9) von beiden Sensoren (S0, S1) zeitweise gleichzeitig erfassbar ist und dass eine Verknüpfungseinrichtung vorgesehen ist, die aus den Signalen (C0, C1) der nur zwei Sensoren (S0, S1) Kommutierungssignale (COMM1, COMM2, COMM3) erzeugt.

7. Sensorsystem nach Anspruch 6, **dadurch gekennzeichnet, dass** die ersten Markierungen (2-5) einen doppelt so großen Winkelbereich (β) der Geberscheibe (1) abdecken wie die zweiten Markierungen (6-9).

8. Sensorsystem nach Anspruch 6 oder 7, **dadurch gekennzeichnet, dass** die Anzahl der zweiten Markierungen (6-9) der Anzahl der Rotorpole oder einem Vielfachen davon entspricht.

9. Sensorsystem nach einem der Ansprüche 6 bis 8, **dadurch gekennzeichnet, dass** auf der Geberscheibe (1) eine zweite koaxial zur Rotationsachse angeordnete Ringmarkierung vorgesehen ist, die in Rotationsrichtung abwechselnd dritte Markierungen (10) und vierte Markierungen (11) aufweist, und zwei die Markierungen (10, 11) erfassende stationäre Sensoren (SA, SB) vorgesehen sind.

10. Sensorsystem nach Anspruch 9, **dadurch gekennzeichnet, dass** die dritten und vierten Markierungen (10, 11) jeweils den gleichen Winkelbereich abdecken.

11. Sensorsystem nach einem der Ansprüche 6 bis 10, **dadurch gekennzeichnet, dass** die Geberscheibe (1) als Lochscheibe ausgebildet ist, wobei die erste und/oder dritte Markierung einer Ausnehmung (2-5, 10) und die zweite und/oder vierte Markierung einem Steg (6-9, 11) entspricht.

12. Sensorsystem nach einem der Ansprüche 6 bis 11, **dadurch gekennzeichnet, dass** die Sensoren (S0, S1, SA, SB) als optische, induktive oder kapazitive Sensoren ausgebildet sind.

## Claims

1. Method for determining the commutation signals for an electronically commutated electromotor, wherein a first and a second stationary sensor (S0, S1) detect alternating first and second markings (2-5; 6-9) of an annular marking of a sensor disc (1) disposed on the rotor shaft of the electromotor, and output sensor signals (C0, C1) with the levels "high", or "low" in correspondence with the respectively detected marking, wherein three commutation signals (COMM1, COMM2, COMM3) are generated from the two sensor signals (C0, C1), wherein the first commutation signal (COMM1) is generated directly from the first sensor signal (C0) and the second commutation signal (COMM2) is generated from a conjunction between the first and the second sensor signal (C0, C1), such that a repetitive sequence of the switching levels of the commutation signals (COMM1, COMM2, COMM3) is obtained,
**characterized in that** the third commutation signal (COMM3) is generated from a conjunction between two or more of the above-mentioned signals (C0, C1, COMM1, COMM2), in particular, from a conjunction between the first and the second sensor signal (C0, C1) or from a conjunction between the first and the second commutation signal (COMM1, COMM2), and similar levels of the sensor signals (C0, C1), in particular the "high" levels, temporarily overlap.

2. Method according to claim 1, **characterized in that** the first commutation signal (COMM1) corresponds to the first sensor signal (C0), the second commutation signal (COMM2) assumes the level "high", when the second sensor signal (C1) has the level "high" and the first sensor signal (C0) has the level "low", and the third commutation signal (COMM3) is formed from a NOR conjunction of the two sensor signals (C0, C1).

3. Method according to claim 1 or 2, **characterized in that** sensor signals (C0, C1) with the level "high" are output when the sensors (S0, S1) detect a second marking (6-9) of the sensor disc (1), and sensor signals (C0, C1) with the level "low" are output when the sensors (S0, S1) detect a first marking (2-5) of the sensor disc.

4. Method according to any one of the preceding claims, **characterized in that** for detecting the rotor position and/or the rotational speed, stationary sensors (SA, SB), which detect a third and fourth marking (10, 11) of the sensor disc (1), output sensor signals (A, B) from which a signal (F) is electronically generated that has the level "high" only when both sensor signals (A, B) have the same level.

5. Method according to claim 4, **characterized in that** the sensor signals (A, B) have a pulse sequence which is offset, in particular, by a quarter of a period.

6. Sensor system of an electronically commutated electromotor for performing the method according to one of the claims 1 through 5, comprising a sensor disc (1) mounted to the rotor shaft of the electromotor and having an annular marking that is disposed coaxially to the axis of rotation and has first and second markings (2-5; 6-9) that alternate in the direction of rotation, two stationary sensors (S0, S1) that each detect the markings (2-9), and a processing unit for the signals (C0, C1) of the sensors (S0, S1),
**characterized in that** the annular marking of the sensor disc (1) alternately comprises several first markings (2-5) and several second markings (6-9), the first and the second sensor (S0, S1) being disposed at an angle (γ) with respect to the axis of rotation of the rotor shaft, wherein one of the second markings (6-9) can be temporarily simultaneously detected by both sensors (S0, S1), and a conjunction means is provided that generates commutation signals (COMM1, COMM2, COMM3) from the signals (C0, C1) of the mere two sensors (S0, S1).

7. Sensor system according to claim 6, **characterized in that** the first markings (2-5) cover an angular range (β) of the sensor disc (1) which is twice as large as that covered by the second markings (6-9).

8. Sensor system according to claim 6 or 7, **characterized in that** the number of second markings (6-9) corresponds to the number of rotor poles or a multiple thereof.

9. Sensor system according to any one of the claims 6 through 8,
**characterized in that** a second annular marking, disposed coaxially with respect to the axis of rotation, is provided on the sensor disc (1) and has third markings (10) and fourth markings (11) that alternate in the direction of rotation, and two stationary sensors (SA, SB) are provided which detect the markings (10, 11).

10. Sensor system according to claim 9, **characterized in that** the third and fourth markings (10, 11) each cover the same angular range.

11. Sensor system according to any one of the claims 6 through 10,
**characterized in that** the sensor disc (1) is designed as a perforated disc, wherein the first and/or third marking corresponds to a recess (2-5, 10) and the second and/or fourth marking corresponds to a web (6-9, 11).

12. Sensor system according to any one of the claims 6 through 11,
**characterized in that** the sensors (S0, S1, SA, SB) are designed as optical, inductive or capacitive sensors.

## Revendications

1. Procédé de détermination des signaux de commutation pour un moteur électrique à commutation électronique, dans lequel un premier et un deuxième capteur stationnaire (S0, S1) détectent des premiers et deuxièmes marquages (2-5 ; 6-9) alternés d'un marquage annulaire d'un disque transmetteur (1) disposé sur l'arbre de rotor du moteur électrique et transmettent en fonction du marquage détecté respectivement des signaux de capteurs (C0, C1) avec les niveaux « High » ou « Low », trois signaux de commutation (COMM1, COMM2, COMM3) étant produits à partir des deux signaux de capteurs (C0,C1), le premier signal de commutation (COMM1) étant généré directement à partir du premier signal de capteur (C0) et le deuxième signal de commutation (COMM2) étant généré à partir d'un chaînage du premier et du deuxième signal de capteur (C0, C1) de sorte à obtenir une séquence répétitive du niveau de commutation des signaux de commutation (COMM1, COMM2, COMM3),
**caractérisé en ce**
**que** le troisième signal de commutation (COMM3) est généré à partir d'un chaînage de deux ou plusieurs des signaux prédéfinis (C0, C1, COMM1, COMM2), en particulier à partir d'un chaînage du premier et du deuxième signal de capteur (C0, C1) ou à partir d'un chaînage du premier et du deuxième signal de commutation (COMM1, COMM2) et en ce que des niveaux similaires des signaux de capteurs (C0, C1) chevauchent en particulier brièvement les niveaux « High ».

2. Procédé selon la revendication 1, **caractérisé en ce que** le premier signal de commutation (COMM1) correspond au premier signal de capteur (C0), le deuxième signal de commutation (COMM2) adopte le niveau « High », lorsque le deuxième signal de capteur (C1) présente le niveau « High » et le premier signal de capteur (C0) présente le niveau « Low », et le troisième signal de commutation (COMM3) est formé à partir d'un chaînage NOR des deux signaux de capteurs (C0, C1).

3. Procédé selon la revendication 1 ou 2, **caractérisé en ce que** des signaux de capteurs (C0, C1) sont émis avec le niveau « High » lorsque les capteurs (S0, S1) détectent un deuxième marquage (6-9) du disque transmetteur (1), et des signaux de capteurs (C0, C1) sont émis avec le niveau « Low », lorsque les capteurs (S0, S1) détectent un premier marquage (2-5) du disque transmetteur.

4. Procédé selon l'une quelconque des revendications précédentes, **caractérisé en ce que** pour la détection de la position du rotor et/ou de la vitesse de rotation, des capteurs stationnaires (SA, SB), qui détectent un troisième et quatrième marquage (10, 11) du disque transmetteur (1), transmettent des signaux de capteurs (A, B) à partir desquels un signal (F) est généré électroniquement, qui ne présente le niveau « High » que lorsque les deux signaux de capteurs (A, B) présentent le même niveau.

5. Procédé selon la revendication 4, **caractérisé en ce que** les signaux de capteurs (A, B) présentent un train d'impulsions décalées, en particulier d'un quart de période.

6. Système de capteurs d'un moteur électrique à commutation électronique permettant de réaliser le procédé selon l'une quelconque des revendications 1 à 5, comprenant un disque transmetteur (1) fixé sur l'arbre de rotor du moteur électrique avec un marquage annulaire disposé coaxialement par rapport à l'axe de rotation, qui présente de manière alternée dans le sens de rotation des premiers et deuxièmes marquages (2-5 ; 6-9), deux capteurs stationnaires (S0, S1) détectant respectivement les marquages (2-9) et une unité de traitement pour les signaux (C0, C1) des capteurs (S0, S1),
**caractérisé en ce**
**que** le marquage annulaire du disque transmetteur (1) présente de manière alternée plusieurs premiers marquages (2-5) et plusieurs deuxièmes marquages (6-9), en ce que le premier et deuxième capteur (S0, S1) sont disposés selon un angle (γ) par rapport à l'axe de rotation de l'arbre de rotor, un des deuxièmes marquages (6-9) des deux capteurs (S0, S1) pouvant être saisi temporairement en même temps et en ce qu'un dispositif dé chaînage est prévu, qui produit des signaux de commutation (COMM1, COMM2, COMM3) à partir des signaux (C0, C1) des capteurs (S0, S1) seulement au nombre de deux.

7. Système de capteurs selon la revendication 6, **caractérisé en ce que** les premiers marquages (2-5) couvrent une plage angulaire (β) du disque transmetteur (1) deux fois aussi grande que les deuxièmes marquages (6-9).

8. Système de capteurs selon la revendication 6 ou 7, **caractérisé en ce que** le nombre de deuxièmes marquages (6-9) correspond au nombre de pôles du rotor ou à un de ses multiples.

9. Système de capteurs selon l'une quelconque des revendications 6 à 8, **caractérisé en ce que** sur le disque transmetteur (1) un deuxième marquage annulaire disposé coaxialement par rapport à l'axe de rotation est prévu, qui présente de manière alternée dans le sens de rotation des troisièmes marquages (10) et des quatrièmes marquages (11), et deux capteurs stationnaires (SA, SB) détectant les marquages (10, 11) sont prévus.

10. Système de capteurs selon la revendication 9, **caractérisé en ce que** les troisièmes et quatrièmes marquages (10, 11) couvrent respectivement la même plage.

11. Système de capteurs selon l'une quelconque des revendications 6 à 10, **caractérisé en ce que** le disque transmetteur (1) est réalisé sous forme de disque ajouré, le premier et/ou troisième marquage d'un évidement (2-5, 10) et le deuxième et/ou quatrième marquage correspondant à un bras (6-9, 11).

12. Système de capteurs selon l'une quelconque des revendications 6 à 11, **caractérisé en ce que** les capteurs (S0, SI, SA, SB) sont réalisés sous forme de capteurs optiques, inductifs ou capacitifs.
